(19) **Europäisches Patentamt / European Patent Office / Office européen des brevets**

(11) **EP 3 762 738 B1**

(12) **FASCICULE DE BREVET EUROPEEN**

(45) Date de publication et mention de la délivrance du brevet:
**06.04.2022 Bulletin 2022/14**

(21) Numéro de dépôt: **19706724.2**

(22) Date de dépôt: **01.03.2019**

(51) Classification Internationale des Brevets (IPC):
**G01S 7/486** *(2020.01)* **G01S 17/89** *(2020.01)*
**G01S 17/10** *(2020.01)*

(52) Classification Coopérative des Brevets (CPC):
**G01S 7/486; G01S 17/10; G01S 17/894**

(86) Numéro de dépôt international:
**PCT/EP2019/055158**

(87) Numéro de publication internationale:
**WO 2019/170542 (12.09.2019 Gazette 2019/37)**

(54) **CAMERA DE VISION A MESURE DE TEMPS DE VOL OPTIMISEE POUR ENVIRONNEMENT MULTI-CAMERAS**

OPTIMIERTE FLUGZEITVISIONSKAMERA FÜR EINE MULTIKAMERAUMGEBUNG

OPTIMISED TIME OF FLIGHT VISION CAMERA FOR A MULTI-CAMERA ENVIRONMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.03.2018 FR 1851944**

(43) Date de publication de la demande:
**13.01.2021 Bulletin 2021/02**

(73) Titulaire: **Teledyne E2V Semiconductors SAS**
**38120 Saint-Egrève (FR)**

(72) Inventeurs:
• **FEREYRE, Pierre**
**38340 Voreppe (FR)**

• **MAILLAND, Christophe**
**38000 Grenoble (FR)**
• **VILLE, Pierre-Emmanuel**
**38100 Grenoble (FR)**

(74) Mandataire: **HGF**
**HGF Limited**
**1 City Walk**
**Leeds LS11 9DX (GB)**

(56) Documents cités:
**WO-A1-2017/061104 JP-A- 2013 076 645**

## Description

DOMAINE TECHNIQUE

L'invention concerne les caméras de vision 3D à mesure de temps de vol, dites caméras TOF (pour *"Time Of Flight"*), qui utilisent comme récepteur matriciel, un capteur d'image (CMOS, CCD). Ces caméras sont notamment utilisées pour la détection d'obstacle, la palettisation, le comptage de personnes dans des applications telles que la vision industrielle (robotique), l'automobile (aide à la navigation, parcage), la cartographie tridimensionnelle, la sécurité ...etc, avec des distances de fonctionnement de l'ordre du mètre à quelques centaines de mètres.

ETAT DE LA TECHNIQUE

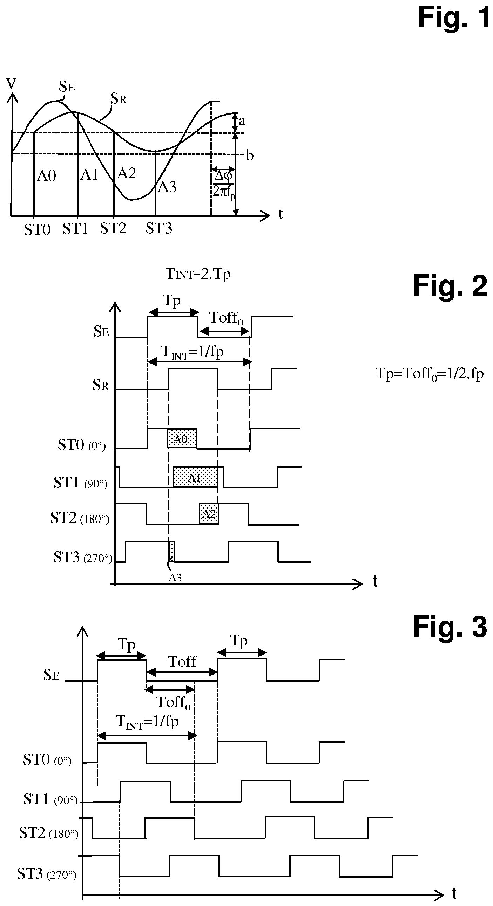

La mesure de distance par la technique de la mesure de temps de vol exploite de manière bien connue le trajet aller/retour d'une onde réfléchie par une cible. Dans une caméra TOF, et comme illustré sur les figures 1 et 2, la technique est la suivante : La caméra émet un signal lumineux SE vers une cible et ce signal SE est modulé sinusoïdalement en amplitude ; le capteur d'image matriciel de la caméra reçoit le signal lumineux SR réfléchi par la cible (convenablement focalisé par une optique) et conduit au moins deux phases de capture d'image par période d'intégration de lumière en synchronisme avec la modulation de lumière (synchronisation émetteur/récepteur), pour mesurer le déphasage $\Delta\varphi$ du signal retour. Si la fréquence porteuse de modulation est $f_p$ et la période d'intégration est TINT=1/fp. La distance *D de* la caméra à une cible qui renvoie la lumière (écho) est donnée par l'équation suivante :

$$D = \frac{C.\Delta\varphi}{4\pi.f_p} \quad (EQ.0),$$

avec C vitesse de lumière.

En général, et comme illustré sur les figures 1 et 2, le capteur capture 4 phases ST0, ST1, ST2 et ST3 sur la période de capture d'une impulsion lumineuse (les phases sont donc déphasées entre elles de $\pi/2$ rad). On peut alors calculer l'amplitude a du signal réfléchi SR, son offset h en amplitude, qui représente la part de signal reçu dû à la lumière ambiante et le décalage de phase $\Delta\varphi$ avec le signal émis SE au moyen des trois équations suivantes :

EQ.1 $\qquad a = \frac{\sqrt{(A0-A2)^2 + (A1-A3)^2}}{2}$

EQ.2 $\qquad h = \frac{A0+A1+A2+A3}{4}$

EQ.3 $\qquad \Delta\varphi = arctan\frac{A3-A1}{A0-A2}$

La mesure de déphasage (à *2kπ* rad près) permet de calculer la distance D à la cible (EQ.0). On sait aussi déterminer la position angulaire du point réfléchissant par rapport au pixel... Tout cela est bien connu.

Dans la pratique, plutôt qu'une modulation sinusoïdale, on utilise une modulation par signal carré, pour sa simplicité d'implémentation dans les circuits numériques. Ceci s'applique tout particulièrement bien aux caméras de vision TOF, à capteurs d'image CCD ou CMOS. Par exemple, si le capteur d'image matriciel est un capteur CMOS, à pixels actifs, les transistors intégrés dans la structure du pixel permettent de commander électroniquement la phase d'ouverture des pixels, pendant laquelle le ou les photosites du pixels vont intégrer la lumière. Les phases de capture du capteur correspondent ainsi aux commandes d'ouverture de l'obturateur électronique des pixels, et elles sont appliquées en même temps (simultanément) à tous les pixels. On parle d'obturateur global (par opposition aux commandes d'obturateur décalées dans le temps, permettant une intégration ligne par ligne dans la matrice de pixels). Ces capteurs CMOS sont capables d'intégrer pendant des temps très courts, de l'ordre de la dizaine de nanosecondes, ce qui convient pour les distances de fonctionnement (*"range"* des caméras TOF) envisagées de l'ordre du mètre à quelques centaines de mètres.

Le chronogramme de la figure 2 illustre les phases A0 à A3 dans ce contexte de modulation par signal carré avec un rapport de cycle de 50%, pour une mesure de temps de vol à quatre phases : le signal émis SE par la source lumineuse est un train d'impulsions lumineuses à la fréquence de modulation $f_e$. La largeur (durée) Tp des impulsions est constante Tp et correspond à la durée des impulsions d'horloge à la fréquence porteuse $f_p$ (Tp=1/2.$f_p$). Cette fréquence de porteuse $f_p$ donne la distance de fonctionnement de la caméra (EQ.0). Elle est généralement paramétrable. C'est-à-dire que le capteur et l'électronique de la caméra ont un circuit de génération d'horloge (base de temps) qui génère une horloge de porteuse correspondant à la distance de fonctionnement choisie, configurée par un opérateur, ou un système de contrôle externe. Cette distance est définie en fonction de l'utilisation de la caméra. Pour fixer les idées, il faut compter 6 ns par mètre. Tp peut ainsi varier en pratique de dix nanosecondes environ, pour les plus faibles distances, à quelques centaines de nanosecondes, pour les plus grandes distances.

Le récepteur matriciel et l'électronique de commande de la source de lumière sont synchronisés pour caler les phases de capture sur la phase d'émission. C'est ainsi que l'on peut ensuite déterminer par calcul pour chaque impulsion émise, dans quelle(s) phase(s) de capture du récepteur matriciel, et dans quelles proportions s'y trouve le signal réfléchi. Dans chaque phase de capture, un photosite de pixel va intégrer 0 à quelques photons selon la coïncidence de la phase de capture considérée et une impulsion de signal retour correspondante (et la position angulaire de la cible qui réfléchit le signal). L'émission d'une série de K impulsions lumineuses (K égal 1000 à 2000 par exemple) permet à chaque période de capture, d'accumuler les photons dans les photosites. C'est ce qui permet d'obtenir un niveau de signal significatif, à la fin de la mesure. Après lecture par le circuit de lecture et conversion analogique numérique du capteur, les signaux A0 à A3 correspondant aux différentes phases de capture sont alors exploités en numérique, dans le capteur, dans la caméra, et/ou par un système externe, au moyen d'algorithmes spécifiques, pour notamment extraire l'information de distance (ou de profondeur) recherchée, mais aussi les autres informations nécessaires à l'application de vision considérée. Ces aspects sont bien connus et ne seront pas détaillés plus, car ce n'est pas l'objet de l'invention.

Chacune des phases de capture d'une période d'intégration TINT est appliquée à tous les pixels simultanément. La durée de chacune des phases est identique ; elle correspond à la durée d'émission Tp, définie par la fréquence de porteuse fp propre à la caméra. La première phase STO est synchrone et en phase avec (calée sur) l'émission d'impulsions SE et c'est elle qui fournit l'échantillon (d'image) A0 des équations EQ.1 à EQ.3 ; la deuxième phase ST1 décalée de 90° par rapport à la première phase ST0 (déphasage de $\pi/2$ rad) fournit l'échantillon A1 ; la troisième phase ST2 est décalée de 180° avec la première phase ST0 et fournit l'échantillon A2 ; la quatrième phase ST3 est décalée de 270° avec la première phase ST0 et fournit l'échantillon A3. La valeur de chaque échantillon est celle obtenue (lue) par accumulation, après K périodes d'intégration synchronisées sur les K impulsions de signal SE émis.

De manière connue encore, les différentes phases de capture pour détecter la position (la phase) d'une impulsion lumineuse retour peuvent être conduites en parallèle, lorsque la structure des pixels le permet. Par exemple une structure à 4 photosites par pixel permet de réaliser en parallèle les quatre phases de capture. Si on a un seul photosite par pixel, alors la source lumineuse est pilotée pour émettre successivement 4 séries d'impulsions lumineuses chacune correspondant à un déphasage respectif de 0, 90, 180 et 270°, et chaque série est associée à l'une des quatre phases de capture. Chaque solution (parallèle/série) a ses avantages et inconvénients (taille de pixel, précision, temps de mesure).

Au final, on obtient les 4 échantillons d'image A0 à A3, un par phase de mesure et on applique les équations EQ.1, EQ.2, EQ.3 vues plus haut. En effet, ces équations bien qu'établies pour une modulation sinusoïdale, fournissent une bonne approximation des valeurs a, h et $\Delta\varphi$. On peut ensuite notamment extraire l'information D recherchée (EQ.0).

Ces mesures et calculs sont faits en chaque pixel, par un circuit de traitement numérique configuré pour cela, dans le capteur, après lecture des pixels. La position des pixels dans la matrice qui ont effectivement détecté un écho permet ensuite de déterminer des positions angulaires de la cible détectée. A noter que tout ce qui vient d'être dit pour une mesure à 4 phases s'applique de manière similaire à une mesure à 2 ou 3 phases de capture.

PROBLEME TECHNIQUE

Ces rappels sur les caméras TOF, le principe de mesure et leur fonctionnement étant faits, on comprend bien que lorsque plusieurs caméras TOF de même type sont utilisées dans un même espace, chaque caméra peut potentiellement être gênée par la présence d'autres caméras dans son champ de vision : selon la proximité, la position angulaire et la puissance de leur source lumineuse, le déphasage détecté peut être pollué par les interférences avec les signaux lumineux émis par ces autres caméras TOF, et fausser la mesure de distance. Par exemple, la distance sera non plus celle de la palette à manipuler ou d'un obstacle sur la route mais celle d'une autre caméra TOF.

La marge de manœuvre sur les fréquences de modulation d'amplitude des caméras pour limiter leurs interférences est étroite, car ces fréquences déterminent la distance de fonctionnement et la précision sur la mesure. Et cela ne règle pas le problème de caméras indépendantes, non liées à un même système (fermé) d'imagerie. On peut penser à synchroniser les caméras entre elles de manière à établir les temps d'émission dans chaque source pour que les phases d'émission ne se recouvrent pas. Dans ce cas une caméra TOF du système est configurée en mode maître pour synchroniser les autres. Outre que cela ne peut s'appliquer qu'à un système d'imagerie fermé, une telle synchronisation nécessite pour être efficace, que soient prévus des moyens de réglage (en usine) de chaque caméra, pour corriger les variations de l'électronique (dispersion technologique). Vu les fréquences et durée d'impulsions en jeu, il faut en effet une précision de synchronisation de l'ordre de quelques picosecondes. Il n'est pas question d'envisager l'usage d'horloges de précision, trop coûteuses. Une telle solution synchrone est donc très contraignante et ne permet pas de faire évoluer les systèmes d'imagerie 3D de façon souple. Par exemple, le changement ou l'ajout d'une caméra dans un système oblige à revoir la synchronisation. WO 2017/061104 concerne ce problème de perturbations en milieu multi-caméras TOF et propose notamment de moduler la durée des cycles et en particulier, une combinaison de deux mesures : diviser par N le nombre d'impulsions par phase, et moduler la durée du temps de coupure de chaque impulsion, en sélectionnant aléatoirement une valeur de rapport de cycle parmi quelques valeurs prédéfinies, par exemple au moyen d'un générateur de nombre pseudo aléatoire (registre à décalage à rétro-action linéaire).

RESUME DE L'INVENTION

L'invention propose une autre solution pour résoudre ce problème de co-fonctionnement possible de multiples caméras TOF dans un même espace, qui n'a pas les inconvénients précités.

L'idée à la base de l'invention est non pas d'empêcher que les sources interfèrent, mais de rendre cela très improbable. La solution s'applique alors qu'il y ait ou pas d'autres caméras TOF dans l'espace d'évolution d'une caméra TOF. C'est-à-dire que la solution proposée n'est plus contraignante : il n'y a pas besoin de savoir si ou non il y a d'autres caméras dans le même espace.

Plus précisément, on propose dans l'invention d'utiliser une modulation supplémentaire appliquée aux signaux synchrones d'horloge d'émission (qui pulse la source de lumière de la caméra) et d'horloge de phase de capture (qui pilote les phases de capture dans le récepteur) et cette modulation supplémentaire sert à moduler la position des impulsions, sans changer leur durée ou largeur, c'est-à-dire sans changer la distance de fonctionnement de la caméra, pour une fréquence porteuse donnée : leur rapport de cycle et la fréquence d'horloge sont alors variables.

Sur la durée d'une série d'impulsions lumineuses émises pour une mesure de temps de vol, cette variabilité de la position des impulsions réduit de façon efficace la part des perturbations de phase dues à d'autres sources de lumières d'autres caméras TOF, et cela reste vrai même si ces autres caméras n'implémentent pas une telle modulation selon l'invention. C'est-à-dire que la solution améliore la fiabilité de la mesure de distance d'une caméra TOF qui évolue dans un espace où d'autres caméras TOF peuvent opérer, que ce système soit ouvert (caméras indépendantes) ou fermé (caméras intégrés à un système d'imagerie cohérent).

Avantageusement, si toutes les caméras TOF qui fonctionnent dans un même espace implémentent chacune la solution de l'invention, chaque caméra est efficacement parée contre les interférences lumineuses avec les autres caméras du système et c'est la fiabilité du système complet qui est améliorée.

L'invention concerne donc une caméra de vision à mesure de temps de vol à N phases de capture, N entier au moins égal à 2, comportant dans un boîtier de caméra :

- un circuit électronique de contrôle pour la mesure de temps de vol recevant un signal d'horloge porteuse avec une fréquence porteuse définie pour la caméra, et configuré pour produire un signal d'horloge de modulation à ladite fréquence porteuse ;
- une source d'émission de lumière modulée par ledit signal d'horloge de modulation pour émettre une série d'impulsions lumineuses vers une scène cible, la durée d'une impulsion et l'intervalle entre deux impulsions définissant un rapport de cycle ;
- un capteur d'image matriciel configuré pour piloter N phases de capture d'image par période d'intégration, en synchronisme avec les impulsions lumineuses émises par la source, où la période d'intégration correspond à la période d'horloge porteuse.

Dans l'invention, le circuit électronique de contrôle comprend un circuit de modulation du signal d'horloge porteuse, appliquant une fonction de modulation de position d'impulsions propre à la caméra, synthétisée par un signal périodique de fréquence propre, inférieure à la fréquence de porteuse, tel que les impulsions de ladite horloge de modulation appliquée à la source lumineuse et pour piloter les N phases de capture du capteur ont une durée d'impulsion constante, fixée par la fréquence de porteuse, et à intervalle de temps entre deux impulsions successives variable, modulé par ladite fonction de modulation, ledit intervalle de temps étant au moins égal à la durée d'impulsion, définissant un rapport de cycle variable, mais inférieur ou égal à 50%.

La fonction de modulation f(t) propre à la caméra est avantageusement paramétrable. Dans un mode de réalisation, le signal périodique de fréquence propre, inférieure à la fréquence de porteuse est un signal sinusoïdal fourni par une boucle à verrouillage de phase, avantageusement paramétrable.

De préférence la fonction de modulation est telle que le rapport de cycle d'horloge de modulation varie entre 10% et 30%.

De préférence, le circuit de modulation de signal d'horloge porteuse est un circuit intégré du capteur d'image matriciel, et le signal d'horloge de modulation est appliqué en interne pour piloter les phases de capture de la mesure de temps de vol, et fourni à l'extérieur pour synchroniser la modulation de la source de lumière de la caméra.

L'invention porte également sur un capteur d'image matriciel configuré pour réaliser une mesure de temps de vol à N phases de capture par période d'horloge porteuse, qui intègre un tel circuit électronique de contrôle qui fournit le signal d'horloge de modulation pour piloter les N phases de capture d'image, et comme signal de synchronisation externe de modulation d'une source lumineuse d'une caméra de vision à mesure de temps de vol.

D'autres caractéristiques, détails et avantages de l'invention ressortiront à la lecture de la description suivante, faite en référence aux dessins annexés à titre d'exemple et qui représentent respectivement :

- la figure 1, une illustration du principe de mesure de temps de vol à N phases de capture, pour mesurer la phase d'un signal lumineux réfléchi par une cible ;
- la figure 2, un chronogramme des phases de capture d'image dans un capteur matriciel synchronisées sur l'émission d'un train d'impulsions lumineuses émis par une source de lumière pulsée d'une caméra TOF, pour une mesure de temps de vol à quatre phases selon l'état de la technique ;
- la figure 3, un chronogramme qui illustre la modulation supplémentaire de position des impulsions selon l'invention, des signaux synchrones d'émission de lumière et de phases de capture d'image ;
- les figures 4 et 5, des chronogrammes similaires reflétant une modulation selon l'état de l'art et selon l'invention, dans le cas d'une mesure de temps de vol à 2 phases de capture par période d'intégration pour la mesure de temps de vol (plus une phase de capture hors période, pour la mesure d'offset représentant la lumière ambiante) ;

- la figure 6, les chronogrammes des signaux d'horloge porteuse de modulation supplémentaire appliqués à un circuit électronique de contrôle de modulation pour une mesure à temps de vol selon l'invention, appliqués à 3 caméras TOF, et des signaux d'horloge de modulation obtenus en sortie, pour les 3 caméras ;
- la figure 7, un schéma bloc simplifié d'un capteur d'image pour caméra TOF, intégrant un circuit électronique de contrôle de modulation selon l'invention ; et
- la figure 8, de façon schématique, une caméra TOF intégrant un tel capteur d'image selon l'invention.

DESCRIPTION DETAILLEE

On a précédemment expliqué en référence aux figures 1 et 2, comment la mesure de distance peut être faite dans une caméra TOF, par capture de 4 phases d'image par période d'intégration correspondant à une période d'horloge porteuse, la capture d'image et l'émission des impulsions lumineuses étant pilotées de façon synchrone, par une horloge de modulation. On a vu que les 3 paramètres a, h et $\Delta\varphi$ représentés graphiquement sur la figure 1, peuvent alors être extraits à partir des équations EQ.1 à EQ.3.

On a vu que le signal d'horloge de modulation qui définit la durée et le rapport de cycle des impulsions du signal lumineux émis SE (et donc le signal réfléchi SR), et des phases de capture ST0 à ST3 du capteur est un signal périodique, à la fréquence $f_e$, avec des impulsions dont la durée (largeur) Tp des impulsions est constante, fixée par une fréquence de porteuse $f_p$ (Tp=1/2f$_p$) propre de la caméra TOF (c'est-à-dire définie ou programmée dans la caméra) et qui détermine la distance de fonctionnement de la caméra pour la mesure de temps de vol ; et dont l'intervalle Toff entre deux impulsions est constant également, et fixé de manière à ce que le rapport de cycle $R = \dfrac{Tp}{Tp+Toff}$ soit inférieur à 50%.

Selon l'invention, et comme illustré sur la figure 3, on applique une fonction de modulation supplémentaire qui est une modulation de position des impulsions d'horloge de modulation. Cela veut dire que le signal d'horloge de modulation (et donc également chacun des signaux SE, SR et ST0 à ST3 qui reproduisent sa forme de façon synchrone) n'est plus périodique : la durée (largeur) des impulsions reste constante et égale à la valeur Tp fixée par la fréquence de porteuse $f_p$ propre à la caméra ; mais l'intervalle Toff entre deux impulsions est variable, avec une valeur minimum Toff$_0$ telle que le rapport de cycle de chaque impulsion est toujours inférieur ou égal à 50%. La fréquence d'horloge de modulation devient variable.

Si on représente la fonction de modulation comme un facteur de modulation multiplicatif k(t) d'une valeur (durée) minimale prédéterminée, on a :

$$fe = \frac{1}{Tp+k(t).Toff_0}.$$

A fréquence porteuse définie, on a au moins deux paramètres de la fonction de modulation : Toff$_0$ et k(t). Le facteur de modulation k(t) est défini sur l'intervalle des réels et compris entre les valeurs réelles positives M1 et M2. Toff$_0$ et M1 définissent la valeur maximum du rapport de cycle et sont choisis pour que ce rapport soit au plus égal à 50% ; et la valeur M2>M1 fixe un rapport de cycle minimum. Ce rapport de cycle minimum aura une valeur généralement comprise entre 10 et 20% (bornes incluses). Si M1=1, alors Toff$_0$ doit être au moins égal à Tp.

On pourrait adopter comme autre représentation, équivalente, de la fonction de modulation, un facteur de modulation additif v(t) de la valeur minimale prédéterminée Toff$_0$. La fréquence d'horloge de modulation fe s'écrit alors : $fe = \dfrac{1}{Tp+Toff_0+v(t).}$ Le facteur de modulation v(t) est défini de la même manière sur un intervalle des réels compris entre les valeurs réelles positives L1 et L2. Les valeurs Toff$_0$ et L1 fixent le rapport de cycle maximum, au plus égal à 50% et la valeur L2>L1 définit un rapport de cycle minimal.

Mais compte tenu de la variabilité de l'intervalle entre deux impulsions que l'on recherche, dans un rapport de 1 à 100 de la valeur Tp, et de préférence dans un rapport de 10 à 100, ce que l'on sait coder numériquement en quelques bits, on se réfère dans la suite à la fonction de modulation, à facteur de modulation de type multiplicatif k(t).

Comme expliqué dans le résumé de l'invention, en appliquant une modulation de la position des impulsions d'horloge de modulation, on réduit la probabilité que le capteur de la caméra intègre de la lumière pulsée issue d'une autre caméra TOF. Autrement dit, la probabilité que la caméra n'intègre que sa propre lumière est améliorée de façon significative.

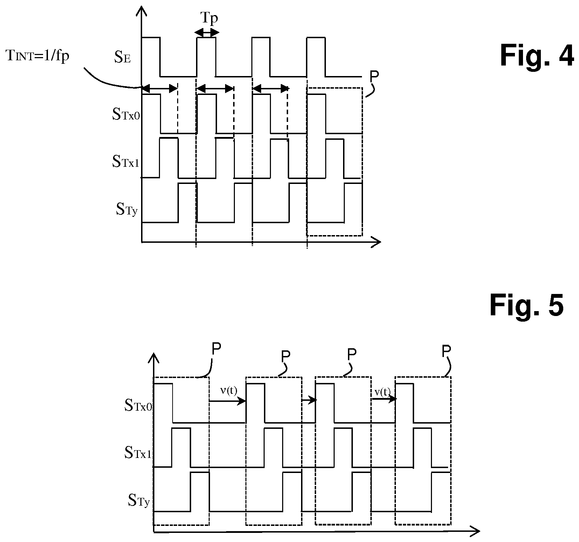

Ce principe de modulation supplémentaire de l'invention s'applique de façon générale à une mesure de temps de vol par capteur d'image matriciel à N phases de capture avec N entier supérieur ou égal à 2. Par exemple, les figures 4 et 5 illustrent le cas d'une mesure de temps de vol à 2 phases de capture STx0 et STx1 par période d'intégration (les deux phases de capture sont alors décalées de 180°), synchrone de la période d'impulsion de signal lumineux SE. Dans ce cas l'horloge de modulation sert aussi à piloter une autre phase de capture STy en dehors de la période d'intégration TINT, pour capturer la lumière ambiante non perturbée (non corrélée) par le retour de la lumière pulsée, dans le but de déduire cet offset de signal dans les calculs de mesure de temps de vol. Dans l'exemple de la figure 3, cette phase STy, est décalée de 360° ($2\pi$ rad).

On remarquera que la figure 5 correspond à une représentation de la fonction de modulation selon l'invention, comme variable additive v(t) à une valeur $Toff_0$ de base de l'intervalle entre deux impulsions du cycle de pilotage des phases de capture. Cette valeur $Toff_0$ est déterminée pour le bon fonctionnement de la mesure de temps de vol à 2 phases de capture par période d'intégration TINT conduite par le capteur, en fonction de la fréquence porteuse fp appliquée, du nombre de phases de capture par période et hors période d'intégration TINT, et pour assurer un rapport de cycle maximal de 50%.

C'est-à-dire que le motif P (Tp, $Toff_0$) d'un cycle de base des N phases de capture (dans l'exemple les phases STxO, STx1, STy) de la figure 4 est inchangé, et l'effet de la modulation selon l'invention est d'intercaler un intervalle de durée variable v(t) entre la répétition de deux motifs P (figure 5).

La fonction de modulation de l'intervalle entre deux impulsions selon l'invention (ou fonction de modulation de position d'impulsion) est de préférence une fonction périodique, ce qui permet une mise en œuvre aisée et facilement paramétrable.

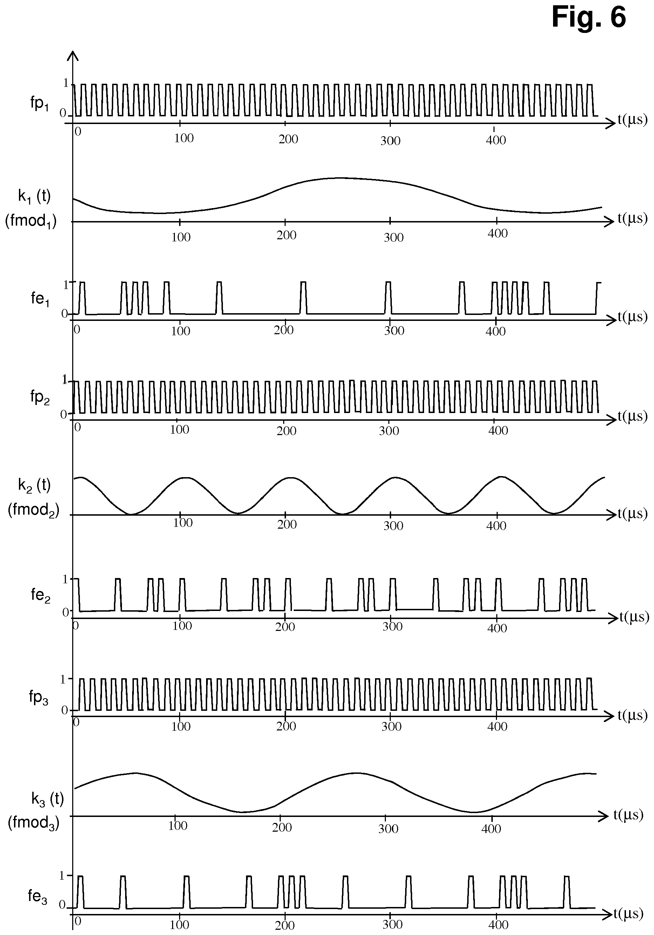

Cette fonction périodique est de préférence une sinusoïde dont on paramètre la fréquence et l'amplitude pour obtenir la fonction de modulation k(t) voulue, comme expliqué supra (rapport de cycle min et max). La figure 6 illustre une telle modulation appliquée à 3 caméras TOF. Dans l'exemple l'amplitude crête du signal de modulation $k_i(t)$, i= 1 à 3, est sensiblement la même pour les 3 caméras, définissant un même intervalle de variation du rapport de cycle (et de la fréquence fe), mais leur fréquence $fmod_i$ est différente. Pour chaque caméra TOF, la figure 6 donne une représentation graphique du signal de porteuse $fp_i$, du signal de modulation sinusoïdale $k_i(t)$ et du signal d'horloge de modulation $fe_i$ de la caméra, pour la mesure de temps de vol, appliqué pour moduler la source de lumière et piloter les phases de capture dans le capteur. On peut voir que les recouvrements des périodes de capture des trois caméras sont limités.

Une telle fonction de modulation périodique sinusoïdale peut être synthétisée et paramétrée facilement en numérique par une boucle à verrouillage de phase PLL. Notamment la fréquence de modulation de chaque caméra TOF est paramétrée en fixant la valeur du diviseur de fréquence de fonctionnement de la boucle, et l'amplitude en fixant une valeur de gain.

Une telle modulation paramétrable selon l'invention permet de différencier chaque caméra TOF d'une autre.

Tout ce qui vient d'être dit s'applique de façon similaire à la synthétisation d'une fonction de modulation à facteur de modulation additif v(t) d'une valeur prédéterminée $Toff_0$ comme expliqué supra en référence aux figures 4 et figure 5.

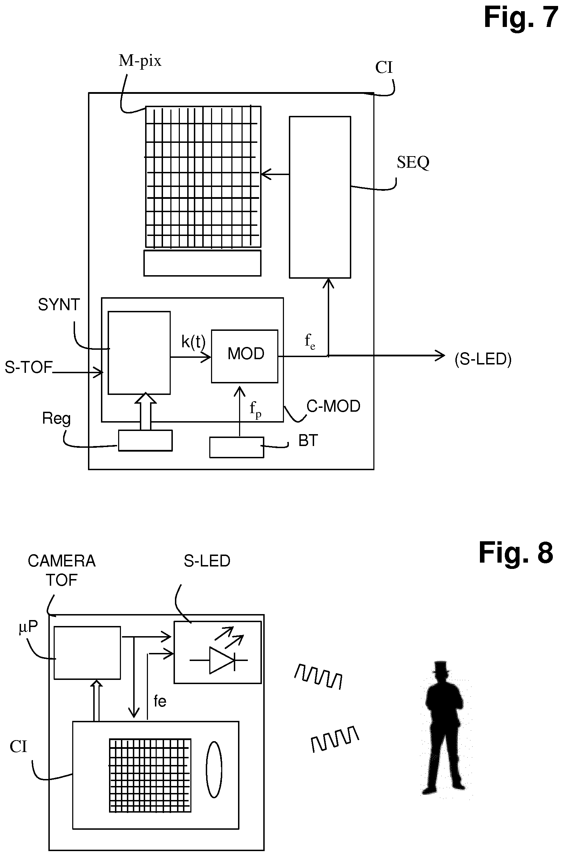

Le circuit électronique de contrôle de modulation pour fournir un signal d'horloge de modulation fe selon l'invention pour une mesure de temps de vol peut être implémenté directement dans le capteur matriciel d'une caméra TOF comme illustré sur les figures 7 et 8. C'est-à-dire que le capteur d'image CI intégré dans la caméra (dans le boîtier de caméra) comprend alors un circuit électronique de contrôle de modulation C-MOD qui comprend un circuit SYNT configuré pour synthétiser en numérique la fonction de modulation k(t) en fonction de paramètres fournis au capteur comme la fréquence porteuse, le nombre de phases de capture ...etc., paramètres stockés en pratique dans un registre Reg. Ce circuit de synthèse peut être comme on l'a vu, une boucle à verrouillage de phase PLL. La valeur minimale $Toff_0$ peut être fournie comme paramètre, ou déterminée par le capteur lui-même (algorithmes de paramétrage pour la mesure de temps de vol). Le circuit délivre en sortie le signal d'horloge de modulation fe selon l'invention dans lequel la position des impulsions est modulée par la fonction k(t), et ce signal d'horloge fe est appliqué au circuit de séquencement SEQ du capteur pour piloter les différentes phases de capture pour la mesure de temps de vol. Ce signal d'horloge de modulation fe est également fourni en externe, comme signal d'horloge de modulation de la source de lumière S-LED de la caméra TOF. En pratique, ce circuit électronique de modulation est activé par la caméra chaque fois qu'une mesure de temps de vol doit être faite (signal S-TOF). Dans l'exemple de la figure 8, les échantillons capturés par le capteur d'image CI correspondant aux différentes phases de capture sont fournis à un circuit de traitement de données $\mu$P de la caméra, pour extraire par calcul les différentes données d'imagerie 3D utilisées pour l'application de vision considérée. Le circuit électronique de contrôle peut aussi être intégré dans l'électronique de commande de la caméra, et c'est cette électronique de commande qui fournit au capteur le signal d'horloge de modulation fe selon l'invention, pour piloter une mesure de temps de vol dans le capteur en synchronisme avec la source de lumière.

## Revendications

1. Caméra de vision à mesure de temps de vol à N phases de capture, N entier au moins égal à 2, comportant dans un boîtier de caméra :

　　- un circuit électronique de contrôle (C-MOD) recevant un signal d'horloge porteuse avec une fréquence porteuse (fp) définie pour la caméra, et configuré pour produire un signal d'horloge de modulation (fe) à la dite fréquence porteuse ;

- une source d'émission de lumière (S-LED) modulée par ledit signal d'horloge de modulation (fe) pour émettre une série d'impulsions lumineuses (SE) vers une scène cible, la durée (Tp) d'une impulsion et l'intervalle entre deux impulsions ($Toff_0$) définissant un rapport de cycle inférieur ou égal à 50% ;

- un capteur d'image matriciel (CI) configuré pour piloter N phases de capture d'image (STO, ST1, ST2, ST3) par période d'intégration (TINT), en synchronisme avec les impulsions lumineuses émises par la source, où la période d'intégration correspond à la période d'horloge porteuse (fp) ; **caractérisée en ce que** :

le circuit électronique de contrôle comprend un circuit de modulation (MOD) du signal d'horloge porteuse, appliquant une fonction de modulation (k(t)) de position d'impulsions propre à la caméra, synthétisée par un signal périodique de fréquence inférieure à la fréquence de porteuse, tel que les impulsions de ladite horloge de modulation fe appliquée comme signal de modulation de la source lumineuse et pour piloter les N phases de capture du capteur ont une durée d'impulsion constante Tp, fixée par la fréquence de porteuse fp, avec Tp=1/2fp, et un intervalle de temps (Toff) entre deux impulsions successives variable, modulé par ladite fonction de modulation (k(t)), ledit intervalle de temps étant au moins égal à la durée d'impulsion, définissant un rapport de cycle d'horloge de modulation variable, mais inférieur ou égal à 50%.

2. Caméra de vision selon la revendication 1, **caractérisée en ce que** ledit signal périodique est un signal sinusoïdal fourni par une boucle à verrouillage de phase.

3. Caméra de vision selon la revendication 1 ou 2, **caractérisée en ce que** la fonction de modulation (k(t)) est une fonction paramétrable dans la caméra.

4. Caméra de vision selon l'une des revendications 1 à 3, dans lequel le circuit électronique de contrôle est un circuit intégré dans le capteur de la caméra.

5. Caméra de vision selon l'une des revendications 1 à 4, dans lequel ladite fonction de modulation est telle que le rapport de cycle d'horloge de modulation (fe) varie entre 10% et 30%.

6. Capteur d'image matriciel, comprenant un circuit électronique de contrôle recevant un signal d'horloge porteuse dont la fréquence porteuse fp correspond à une distance de fonctionnement définie pour une mesure de temps de vol à N phases de capture par période d'horloge porteuse, N entier au moins égal à 2, **caractérisé en ce que** ledit circuit électronique de contrôle comprend un circuit de modulation (C-MOD) du signal d'horloge porteuse appliquant une fonction (k(t)) de modulation de position d'impulsions synthétisée par un signal périodique de fréquence ($fmod_1$) inférieure à la fréquence de porteuse, pour fournir une horloge de modulation (fe) telle que les impulsions de ladite horloge de modulation (fe) ont une durée d'impulsion Tp constante, fixée par la fréquence de porteuse, avec Tp=1/2fp et un intervalle de temps entre deux impulsions successives variable (Toff), modulé par ladite fonction de modulation, ledit intervalle de temps étant au moins égal à la durée d'impulsion, définissant un rapport de cycle variable, mais inférieur ou égal à 50%, et ladite horloge de modulation (fe) étant appliquée à un circuit de séquencement (SEQ) de la matrice de pixels du capteur, pour piloter lesdites N phases de capture, et fourni comme signal externe de synchronisation d'une source de lumière (S-LED) d'une caméra de vision à temps de vol.

7. Capteur d'image matriciel selon la revendication 6, dans lequel ledit signal périodique est un signal sinusoïdal fourni par une boucle à verrouillage de phase.

8. Capteur d'image matriciel selon la revendication 6 ou 7, **caractérisé en ce que** la fonction de modulation (k(t)) est une fonction paramétrable.

9. Capteur d'image matriciel selon l'une des revendications 6 à 8, dans lequel ladite fonction de modulation est telle que le rapport de cycle d'horloge de modulation (fe) varie entre 10% et 30%.

**Patentansprüche**

1. Laufzeitmessende Bildverarbeitungskamera mit N Erfassungsphasen, wobei N eine ganze Zahl von mindestens gleich 2 ist, umfassend in einem Kameragehäuse:

- eine elektronische Steuerschaltung (C-MOD), die ein Trägertaktsignal mit einer für die Kamera definierten Trägerfrequenz (fp) empfängt und konfiguriert ist, um ein Modulationstaktsignal (fe) mit der genannten Trägerfrequenz zu erzeugen;
- eine Lichtemissionsquelle (S-LED), die durch das Modulationstaktsignal (fe) moduliert wird, um eine Reihe von Lichtimpulsen (SE) an eine Zielszene auszusenden, wobei die Dauer (Tp) eines Impulses und das Intervall zwischen zwei Impulsen ($Toff_0$) ein Zyklusverhältnis von weniger als oder gleich wie 50 % definieren;
- einen Matrix-Bildsensor (CI), der konfiguriert ist, um N Bildaufnahmephasen (STO, ST1, ST2, ST3) pro Integrationsperiode (TINT) synchron mit den von der Quelle ausgesendeten Lichtimpulsen anzusteuern, wobei die Integrationsperiode der Trägertaktperiode (fp) entspricht; **dadurch gekennzeichnet, dass**:

die elektronische Steuerschaltung eine Modulationsschaltung (MOD) des Trägertaktsignals umfasst, die eine der Kamera eigene Modulationsfunktion (k(t)) der Impulsposition anwendet, die durch ein periodisches Signal mit einer Frequenz unterhalb der Trägerfrequenz synthetisiert wird, sodass die Impulse des Modulationstakts fe, die als Modulationssignal der Lichtquelle und zur Steuerung der N Erfassungsphasen des Sensors angewendet werden, eine konstante Impulsdauer Tp, die durch die Trägerfrequenz fp festgelegt ist, mit Tp=1/2fp, und ein variables Zeitintervall (Toff) zwischen zwei aufeinanderfolgenden Impulsen, das durch die Modulationsfunktion (k(t)) moduliert wird, aufweisen, wobei das Zeitintervall mindestens gleich wie die Impulsdauer ist, wodurch ein variables Modulationstaktzyklusverhältnis definiert wird, das jedoch kleiner als oder gleich wie 50 % ist.

2. Bildverarbeitungskamera nach Anspruch 1, **dadurch gekennzeichnet, dass** das periodische Signal ein Sinussignal ist, das von einer Phasenregelschleife bereitgestellt wird.

3. Bildverarbeitungskamera nach Anspruch 1 oder 2, **dadurch gekennzeichnet, dass** die Modulationsfunktion (k(t)) eine in der Kamera parametrierbare Funktion ist.

4. Bildverarbeitungskamera nach einem der Ansprüche 1 bis 3, wobei die elektronische Steuerschaltung eine in den Kamerasensor integrierte Schaltung ist.

5. Bildverarbeitungskamera nach einem der Ansprüche 1 bis 4, wobei die Modulationsfunktion derart ist, dass das Modulationstaktzyklusverhältnis (fe) zwischen 10 % und 30 % variiert.

6. Matrixbildsensor, umfassend eine elektronische Steuerschaltung, die ein Trägertaktsignal empfängt, dessen Trägerfrequenz fp einem Betriebsabstand entspricht, der für eine Laufzeitmessung mit N Erfassungsphasen pro Trägertaktperiode definiert ist, wobei N eine ganze Zahl von mindestens gleich 2 ist, **dadurch gekennzeichnet, dass** die elektronische Steuerschaltung eine Schaltung zur Modulation (C-MOD) des Trägertaktsignals umfasst, die eine Funktion (k(t)) zur Modulation der Position von Impulsen anwendet, die durch ein periodisches Signal mit einer Frequenz (fmod$_1$) synthetisiert wird, die niedriger als die Trägerfrequenz ist, um einen Modulationstakt (fe) bereitzustellen, sodass die Impulse des Modulationstakts (fe) eine konstante Impulsdauer Tp aufweisen, die durch die Trägerfrequenz festgelegt ist, mit Tp=1/2fp und einem variablen Zeitintervall zwischen zwei aufeinanderfolgenden Impulsen (Toff), das durch die Modulationsfunktion moduliert wird, wobei das Zeitintervall mindestens gleich wie die Impulsdauer ist, ein variables Tastyzklusverhältnis definiert, das jedoch kleiner als oder gleich wie 50 % ist, und wobei der Modulationstakt (fe) auf eine Sequenzschaltung (SEQ) der Pixelmatrix des Sensors angewendet wird, um die N Erfassungsphasen zu steuern, und als externes Synchronisationssignal für eine Lichtquelle (S-LED) einer Laufzeit-Bildverarbeitungskamera bereitgestellt wird.

7. Matrixbildsensor nach Anspruch 6, wobei das periodische Signal ein Sinussignal ist, das von einer Phasenregelschleife bereitgestellt wird.

8. Matrixbildsensor nach Anspruch 6 oder 7, **dadurch gekennzeichnet, dass** die Modulationsfunktion (k(t)) eine parametrierbare Funktion ist.

9. Matrixbildsensor nach einem der Ansprüche 6 bis 8, wobei die Modulationsfunktion derart ist, dass das Modulationstaktzyklusverhältnis (fe) zwischen 10 % und 30 % variiert.

## Claims

1. Time-of-flight vision camera with N capture phases, where N is an integer of at least 2, comprising within a camera housing:

   - an electronic control circuit (C-MOD) receiving a carrier clock signal with a carrier frequency (fp) defined for the camera, and configured to output a modulation clock signal (fe) at the said carrier frequency;
   - a light source (S-LED) modulated by the said modulation clock signal (fe) to emit a series of light pulses (SE) towards a target scene, the pulse duration (Tp) and the interval between two pulses (Toff$_0$) defining a cycle ratio less than or equal to 50%;
   - a matrix image sensor (CI) configured to control N image capture phases (STO, ST1, ST2, ST3) per integration period (TINT), synchronously with the light pulses emitted by the source, where the integration period corresponds to the carrier clock period (fp);

   **characterised in that**:

   the electronic control circuit comprises a modulation circuit (MOD) for modulating the carrier clock signal, applying a camera-specific pulse position modulation function (k(t)), synthesised by a periodic frequency signal lower than the carrier frequency, such that the pulses of the said modulation clock fe applied as a signal to modulate the light source and to control the N capture phases of the sensor have a constant pulse duration Tp, fixed by the carrier frequency fp, with Tp=1/2fp, and a variable time interval (Toff) between two successive pulses, modulated by the said modulation function (k(t)), the said time interval being at least equal to the pulse duration, defining a modulation clock cycle ratio that is variable but less than or equal to 50%.

2. Vision camera according to claim 1, **characterised in that** the said periodic signal is a sinusoidal signal supplied by a phase-locked loop.

3. Vision camera according to claim 1 or 2, **characterised in that** the modulation function (k(t)) is a function configurable in the camera.

4. Vision camera according to any one of claims 1 to 3, wherein the said electronic control circuit is a circuit integrated into the sensor of the camera.

5. Vision camera according to any one of claims 1 to 4, wherein the said modulation function is such that the modulation clock cycle ratio (fe) varies between 10% and 30%.

6. Matrix image sensor, comprising an electronic control circuit receiving a carrier clock signal whose carrier frequency fp corresponds to an operating distance defined for a time-of-flight measurement with N capture phases per carrier clock period, where N is at least equal to 2, **characterised in that** the said electronic control circuit comprises a modulation circuit (C-MOD) for modulating the carrier clock signal by applying a pulse position modulation function (k(t)) synthesised by a periodic frequency signal (fmod$_1$) lower than the carrier frequency, to supply a modulation clock (fe) such that the pulses of the said modulation clock (fe) have a constant pulse duration Tp, fixed by the carrier frequency, with Tp=1/2fp and a variable time interval (Toff) between two successive pulses, modulated by the said modulation function, the said time interval being at least equal to the pulse duration, defining a cycle ratio that is variable but less than or equal to 50%, and the said modulation clock (fe) being applied to a sequencing circuit (SEQ) of the sensor pixel matrix to control the said N capture phases, and supplied as an external synchronisation signal for synchronising a light source (S-LED) of a time-of-flight vision camera.

7. Matrix image sensor according to claim 6, wherein the said periodic signal is a sinusoidal signal supplied by a phase-locked loop.

8. Matrix image sensor according to claim 6 or 7, **characterised in that** the modulation function (k(t)) is a configurable function.

9. Matrix image sensor according to any one of claims 6 to 8, wherein the said modulation function is such that the modulation clock cycle ratio (fe) varies between 10% and 30%.

# Fig. 1

# Fig. 2

$T_{INT}=2.Tp$

$Tp=Toff_0=1/2.fp$

# Fig. 3

Fig. 4

Fig. 5

# Fig. 6

**Fig. 7**

**Fig. 8**

**EP 3 762 738 B1**

## RÉFÉRENCES CITÉES DANS LA DESCRIPTION

### Documents brevets cités dans la description

- WO 2017061104 A